# EUROPÄISCHE PATENTANMELDUNG

(11) **EP 1 582 251 A1**
(43) Veröffentlichungstag der Anmeldung: **05.10.2005**
(21) Anmeldenummer: 05450019.4
(22) Anmeldetag: 02.02.2005
(51) Int. Cl.: B01D 53/32, B03C 3/16, B03C 3/34

(54) **Verfahren und Anlage zur Reinigung von Abgasen**

(30) Priorität: 02.03.2004 AT 3372004
(71) Anmelder: Scheuch GmbH, 4971 Aurolzmünster (AT)
(72) Erfinder: Pretzl, Robert, 4680 Haag am Hausruck (AT)
(74) Vertreter: Sonn & Partner Patentanwälte

(57) **Zusammenfassung**

Die Erfindung betrifft ein Verfahren und eine Anlage (4) zur Reinigung von Abgasen mit zumindest einem Nass-Elektrofilter (5) mit zumindest einem Eingang (15) und zumindest einem Ausgang (16) für Kühlluft zur Rückgewinnung eines Teiles der Wärme der Abgase. Zur Schaffung eines derartigen Verfahrens und einer derartigen Reinigungsanlage (4), welche möglichst gute Abreinigung und gleichzeitig möglichst gute Wärmerückgewinnung bei einfachem und kostengünstigem Aufbau gewährleistet, ist zumindest ein von den Abgasen durchströmter Wärmetauscher (6) mit zumindest einem Eingang (16) und zumindest einem Ausgang (17,18) für die zu erwärmende Luft zur Rückgewinnung eines weiteren Teiles der Wärme der Abgase vorgesehen, wobei zumindest ein Eingang (16) des zumindest einen Wärmetauschers (6) mit zumindest einem Ausgang (15) für die Kühlluft des Nass-Elektrofilters (5) verbunden ist, sodass der Wärmetauscher (6) von der vom Nass-Elektrofilter (5) aufgewärmten Kühlluft durchströmt wird.

## Beschreibung

Die Erfindung betrifft ein Verfahren zur Reinigung von Abgasen, wobei die Abgase elektrostatisch im Nassverfahren gereinigt und die Abgase während der elektrostatischen Reinigung mit Luft gekühlt werden und wobei ein Teil der Wärme der Abgase über die bei der elektrostatischen Reinigung aufgewärmte Kühlluft rückgewonnen wird.

Die Erfindung betrifft weiters eine Anlage zur Reinigung von Abgasen mit zumindest einem Nass-Elektrofilter, mit zumindest einem Eingang und zumindest einem Ausgang für Kühlluft zur Rückgewinnung eines Teiles der Wärme der Abgase.

Die Erfindung bezieht sich hauptsächlich auf Abgase, mit Verunreinigungen in Form fester Partikel sowie in Tropfenform vorliegender Aerosole. Eine Hauptanwendung des erfindungsgemäßen Verfahrens und der erfindungsgemäßen Reinigungsanlage besteht in der Reinigung von Rauchgasen wie sie bei der Verbrennung von Biomasse oder auch Müll auftreten. In der holzverarbeitenden Industrie werden Bestandteile bei der Spanplattenherstellung oder auch alte Spanplatten der Verbrennung zugeführt, wobei feste Verunreinigungen und Aerosole sowie andere Bestandteile mit den Abgasen ausgeschieden werden.

Zur Abscheidung derartiger Verunreinigungen von Abgasen sind trocken arbeitende Reinigungsanlagen wie Zyklone, Gewebe- oder Schichtbettfilter und Trockenelektrofilter bzw. Elektroschichtbettfilter bekannt. Bei staubförmigen Emissionen zeigen solche trocken arbeitende Filter zwar gute Ergebnisse, welche jedoch bei klebrigen Verunreinigungen wie z.B. Harzaerosolen eine kontinuierliche und effiziente Reinigung unmöglich machen.

Durch nass arbeitende Abscheidesysteme, wie z.B. Nass-Elektrofilter, kann eine effizientere Abscheidung erzielt werden. Bei derartigen Nass-Elektrofiltern strömt das Rauchgas vorzugsweise vertikal von unten nach oben durch wabenförmig angeordnete Niederschlagsflächen. Im Zentrum der Waben befinden sich Hochspannungselektroden, wodurch die Verunreinigungen ionisiert werden und sich an den Niederschlagsflächen anordnen. Zeitweise werden die Niederschlagsflächen gespült, sodass die Verunreinigungen zusammen mit der Spülflüssigkeit nach unten fließen, von wo sie zur weiteren Entsorgung abtransportiert werden. Derartige Nass-Elektrofilter sind jedoch von der Bauweise relativ aufwendig und somit teuer in der Herstellung.

So genannte Kondensations-Nass-Elektrofilter unterscheiden sich von den herkömmlichen Nass-Elektrofiltern dadurch, dass in der Regel zylindrische Rohrbündel die Niederschlagsflächen bilden und die Rohre von der Außenseite von Kühlluft umströmt werden, Dadurch bildet sich auf der Rohrinnenseite ein Kondensatfilm, der die Abscheidung sowie die kontinuierliche Abreinigung unterstützt. Sie bieten zusätzlich den Vorteil, dass die aufgewärmte Außenluft entweder zur Wärmerückgewinnung oder zur Teilentschwadung genutzt werden kann. Zudem sind derartige Kondensations-Nass-Elektrofilter gegenüber den wabenförmig aufgebauten Nass-Elektrofiltern billiger in der Herstellung.

Die AT 410 180 B beschreibt ein Verfahren und eine Anlage zur Rückgewinnung der Wärme von Abgasen, wobei zur elektrostatischen Reinigung wabenförmig aufgebaute Nass-Elektrofilter eingesetzt werden, welchen ein oder mehrere Wärmetauscher nachgeschaltet sind, die den Abgasen Energie entziehen, welche zur Entschwadung oder für andere Zwecke verwendet wird. Nachteilig dabei ist, dass die Wärmetauscher zur Erzielung einer möglichst hohen Wärmerückgewinnung relativ groß und somit auch teuer in der Herstellung sind. Darüber hinaus werden derartige Wärmetauscher üblicherweise von der Außenluft durchströmt, was in der kalten Jahreszeit zu einem partiellen Vereisen des Wärmetauschers führen kann.

Die EP 740 963 B1 zeigt eine Anlage zur Reinigung von staubhaltigem Abgas, wobei obengenannte Kondensations-Nass-Elektrofilter eingesetzt werden, welche durch die Umgebungsluft gekühlt werden. Durch diese Kühlung wird die Kondensation des Abgases gewährleistet und es kann gleichzeitig ein Teil der Wärme der Abgase rückgewonnen werden. Bei diesem Ausführungsbeispiel wird die in dem Kondensations-Nass-Elektrofilter aufgewärmte Umgebungsluft dem gereinigten Abgas beigemischt, wodurch eine Entschwadung der Abgase erzielt wird. Dabei ist der Anteil der rückgewonnenen Energie jedoch relativ gering.

Die Aufgabe der vorliegenden Erfindung besteht in der Schaffung eines oben genannten Verfahrens zur Reinigung von Abgasen, bei dem in möglichst effizienter Weise möglichst viel Energie aus den Abgasen rückgewonnen werden kann, ohne dass die oben genannten Probleme, wie beispielsweise das Vereisen der Wärmetauscher, auftreten. Zudem soll das Verfahren möglichst kostengünstig durchführbar sein.

Weiters besteht die Aufgabe der vorliegenden Erfindung in der Schaffung einer oben genannten Anlage zur Reinigung von Abgasen, mit der möglichst effizient Wärme aus den Abgasen rückgewonnen werden kann, ohne dass Probleme des Standes der Technik auftreten. Die Anlage soll möglichst kostengünstig und platzsparend aufgebaut sein.

Gelöst wird die erfindungsgemäße Aufgabe in verfahrensmäßiger Hinsicht dadurch, dass neben jenem Teil der Wärme der Abgase, welcher über die bei der elektrostatischen Reinigung aufgewärmte Kühlluft rückgewonnen wird, ein weiterer Teil der Wärme der Abgase im Wärmetauschverfahren rückgewonnen wird, indem die während der elektrostatischen Reinigung aufgewärmte Kühlluft in zumindest einer weiteren Stufe durch die Abgase weiter erwärmt wird. Durch diese Kombination eines luftgekühlten Kondensations-Nass-Elektrofilters mit zumindest einem Wärmetauscher wird eine effizientere Rückgewinnung der Wärme der Abgase erzielt und gleichzeitig verhindert, dass der Wärmetauscher partiell einfriert, da dieser durch die bereits in der Reinigungsstufe aufgewärmte Luft und nicht durch die allenfalls sehr kalte Umgebungsluft durchströmt wird. Weiters kann der Wärmetauscher für einen bestimmten Grad an Rückgewinnung der Wärme kleiner als herkömmliche Wärmetauscher ausgeführt werden oder es kann mit einem gleich großen Wärmetauscher mehr Energie rückgewonnen werden.

Vorteilhafterweise durchströmen die Abgase die elektrostatische Reinigungsstufe und die zumindest eine weitere Wärmetauschstufe von unten nach oben. In diesem Fall strömt die Spülflüssigkeit zur Abreinigung des Kondensations-Nass-Elektrofilters im Gegenstrom zum Abgas durch die Anlage. Dadurch ist ein maximaler Reinigungseffekt erzielbar. Darüber hinaus benötigen turmartig aufgebaute Reinigungsanlagen weniger Grundfläche, was in vielen Produktionsbereichen von besonderer Bedeutung ist.

Die Abgase können vor der elektrostatischen Reinigung vorgereinigt werden. Diese Vorreinigung kann in Abhängigkeit der Zusammensetzung der zu reinigenden Abgase verschiedenartig aufgebaut sein.

Weiters ist es möglich, dass die Abgase vor der elektrostatischen Reinigung gekühlt und gegebenenfalls gesättigt werden.

Weiters wird die Strömung der Abgase vor der elektrostatischen Reinigung vorzugsweise vergleichmäßigt. Diese Vergleichsmäßigung der Strömung kann durch verschiedene Einbauten vor bzw. unterhalb der Kondensations-Nass-Elektrofilter-Stufe erzielt werden und gewährleistet eine gleichmäßige Durchströmung der Röhren des Kondensations-Nass-Elektrofilters und somit einen gleichmäßigen Beschlag der Rohrinnenflächen mit den Verunreinigungen.

Zumindest ein Teil der rückgewonnenen Wärme kann zur Entschwadung der Abgase verwendet werden. Durch die Beimengung der erwärmten Luft wird Feuchtigkeit aus dem Abgas aufgenommen und somit die Wolkenbildung beim Ausstoß der gereinigten Abgase in die Atmosphäre reduziert.

Vorteilhafterweise wird die Menge der rückgewonnenen Wärme geregelt. Diese Regelung kann beispielsweise in Abhängigkeit der Umgebungstemperatur bzw. Umgebungsluftfeuchte, der relativen Luftfeuchte und Temperatur der Mischluft aus Abgas und Entschwadungsluft oder dergleichen erfolgen.

Optimale Bedingungen werden dann erzielt, wenn 10-40%, vorzugsweise 20-25%, der Wärmerückgewinnung in der zumindest einen elektrostatischen Reinigungsstufe erfolgen.

Schließlich ist es möglich, dass den gereinigten Abgasen weitere Feuchtigkeit entzogen wird, was beispielsweise durch sogenannte Tropfenabscheider geschehen kann.

Die erfindungsgemäße Aufgabe wird auch durch eine oben genannte Anlage gelöst, wobei zumindest ein von den Abgasen durchströmter Wärmetauscher mit zumindest einem Eingang und zumindest einem Ausgang für die zu erwärmende Luft zur Rückgewinnung eines weiteren Teiles der Wärme der Abgase vorgesehen ist, wobei zumindest ein Eingang des zumindest einen Wärmetauschers mit dem zumindest einem Ausgang für die Kühlluft des Nass-Elektrofilters verbunden ist, sodass der Wärmetauscher von der vom Nass-Elektrofilter aufgewärmten Kühlluft durchströmt wird. Somit wird die in der Reinigungsstufe aufgewärmte Kühlluft als Wärmeträger für den zumindest einen Wärmetauscher verwendet, weshalb dieser bei gleicher Menge rückgewonnener Wärme kleiner als herkömmliche Wärmetauscher ausgebildet werden kann oder bei Wärmetauschern gleicher Baugröße mehr Wärme aus den Abgasen zurückgewonnen werden kann. Die Kombination der Verwendung eines Kondensations-Nass-Elektrofilters mit den Vorteilen der optimalen Abscheidung der Verunreinigungen und des Selbstreinigungseffekts durch die Kondensation zusammen mit zumindest einem Wärmetauscher, kann eine optimale Abreinigung bei gleichzeitig optimaler Wärmerückgewinnung erzielt werden. Der Aufwand ist durch die Verwendung eines billigeren Kondensations-Nass-Elektrofilters mit Röhren und eines kleineren Wärmetauschers sowohl in baulicher als auch kostenmäßiger Hinsicht geringer. Jeder Wärmetauscher kann jeweils einen Eingang und Ausgang oder Eingänge und Ausgänge für das aufzuwärmende Medium aufweisen.

Gemäß einem weiteren Merkmal der Erfindung ist zumindest ein Nass-Elektrofilter und zumindest ein Wärmetauscher übereinander angeordnet, wobei der Einlass des Rohgases unterhalb des Nass-Elektrofilters angeordnet ist, sodass die Reinigungsanlage von unten nach oben von den Abgasen durchströmt wird. Dadurch erfolgt die Abreinigung des Nass-Elektrofilters im Gegenstrom zu den Abgasen.

Von Vorteil kann auch eine Anordnung sein, bei der zumindest ein Nass-Elektrofilter und zumindest ein Wärmetauscher nebeneinander angeordnet sind, wobei zumindest ein Ausgang für die Kühlluft des Nass-Elektrofilters im Wesentlichen unmittelbar neben zumindest einem Eingang für die zu erwärmende Luft des Wärmetauschers angeordnet ist. Eine derartige Anordnung benötigt zwar mehr Grundfläche, jedoch ist die Bauhöhe gegenüber einem turmartigen Aufbau geringer. Zudem sind weniger Leitungen für die Führung der Kühlluft vom Elektrofilter zum Wärmetauscher notwendig.

Vorteilhafterweise ist zumindest ein Nass-Elektrofilter als luftgekühltes Röhrenfilter mit vorzugsweise zylindrischen Röhren ausgebildet. Ein derartiges Kondensations-Nass-Elektrofilter lässt sich relativ kostengünstig und einfach herstellen.

Vor dem ersten Nass-Elektrofilter kann zumindest eine Vorreinigungsstufe angeordnet sein, welche die Abgase auf verschiedene Arten von verschiedenen Verunreinigungen vorreinigt.

Ebenso ist es möglich, dass vor dem Nass-Elektrofilter zumindest eine Kühl- und allenfalls Sättigungsstufe angeordnet ist. Durch diese Kühl- und allenfalls Sättigungsstufe kann eine Vorbehandlung der Abgase für eine bessere Abreinigung erzielt werden.

Um eine gleichmäßige Verteilung der Strömung der Abgase im Nass-Elektrofilter zu erzielen, können vor dem Nass-Elektrofilter Einbauten zur Vergleichmäßigung der Strömung der Abgase vorgesehen sein. Diese Einbauten können durch Leitbleche, Lochböden oder dergleichen gebildet sein, welche in regelmäßigen Abständen oder kontinuierlich durch Wasser abgereinigt werden.

Zumindest ein Ausgang für die zu erwärmende Luft des Wärmetauschers kann mit einer Leitung zur Abführung der gereinigten Abgase in die Atmosphäre zur Entschwadung der Abgase verbunden sein.

Vorzugsweise ist eine Einrichtung zur Regelung der Menge der zugeführten erwärmten Luft vorgesehen, sodass die Entschwadung der Abgase oder eine andere Weiterverwertung der Wärme der Abgase an die jeweiligen Bedingungen angepasst werden kann.

Der zumindest eine Wärmetauscher kann als Kreuzstromwärmetauscher ausgebildet sein.

Die vorliegende Erfindung kann aus nur einem elektrostatischen Filter und einem Wärmetauscher oder auch durch eine mehrstufige Anordnung von Elektrofiltern und Wärmetauschern gebildet sein.

Die vorliegende Erfindung wird anhand der beiliegenden Abbildungen, welche Ausführungsbeispiele der Erfindung zeigen, näher erläutert.

Darin zeigen:
- Fig. 1: eine schematische Anordnung einer Biomasse-Feuerungsanlage mit einer erfindungsgemäßen Anlage zur Reinigung der Abgase;
- Fig. 2: die Anlage zur Reinigung der Abgase gemäß Fig. 1 in vergrößerter Darstellung;
- Fig. 3: eine weitere Ausführungsform einer Anlage zur Reinigung der Abgase gemäß der vorliegenden Erfindung; und
- Fig. 4: ein Schnittbild durch das Kondensations-Nass-Elektro-filter aus Fig. 3 entlang der Schnittlinie IV-IV.

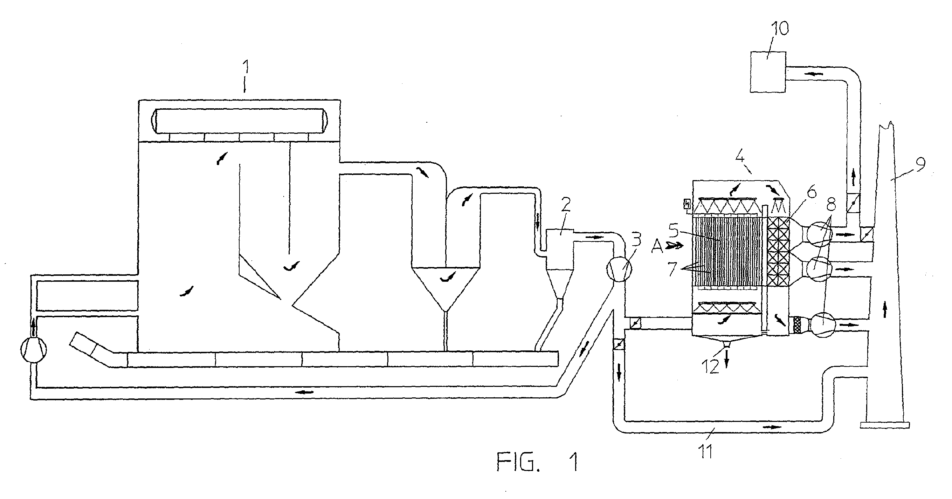

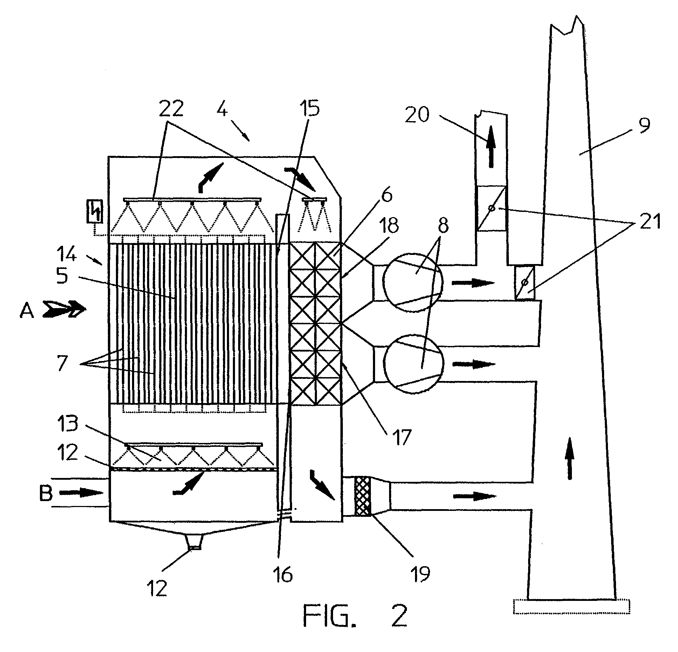

Fig. 1 zeigt eine schematische Abbildung einer Biomasse-Feuerung 1 mit eine Anlage 4 zur Reinigung der Abgase gemäß der vorliegenden Anmeldung. In der Biomasse-Feuerungsanlage 1 werden beispielsweise unbelastete Brennstoffe wie Waldhackgut, Rinden, Sägespäne, Stroh usw. sowie belastete Brennstoffe wie beschichtete Span- und Faserplatten, Alt- und Resthölzer einer Verbrennung zugeführt. Nach der Verbrennung werden diverse Stufen durchlaufen, bevor die Abgase durch eine Vorreinigungsstufe 2 zur Vorabscheidung hauptsächlich fester Verunreinigungen gelangen. Über einen Ventilator 3 werden die Abgase teilweise der Biomasse-Feuerungsanlage 1 rückgeführt und teilweise in die Anlage 4 zur Reinigung der Abgase weitergeleitet. Die Reinigungsanlage 4 ist in Fig. 2 näher erläutert. Sie umfasst einerseits ein Nass-Elektrofilter 5, andererseits einen Wärmetauscher 6 zur Rückgewinnung der Wärme aus den Abgasen. Entsprechend Pfeil A wird Umgebungsluft zur Kühlung des Nass-Elektrofilters 5 verwendet, sodass es zur Kondensation der Abgase in den Röhren 7 des Nass-Elektrofilters 5 kommt. Die im Nass-Elektrofilter 5 vorgewärmte Luft wird dem Wärmetauscher 6 zugeführt, wo eine weitere Erwärmung der Luft stattfindet. Die erwärmte Umgebungsluft, welche die Wärme aus den Abgasen aufgenommmen hat wird dann über Ventilatoren 8 entweder den gereinigten Abgasen zur Entschwadung in Reingaskamin 9 beigemengt oder einer Werksanlage 10 oder dergleichen zu Heizzwecken oder dergleichen zugeführt. Über eine Bypassleitung 11 kann das Rohgas direkt in den Reingaskamin 9 geleitet werden, beispielsweise wenn die Reinigungsanlage 4 zu Wartungs- oder Reinigungszwecken abgeschaltet werden musste. Die im Nass-Elektrofilter 5 abgeschiedenen Verunreinigungen werden über einen Trichter 12 ausgetragen und einer Deponie oder einer Stelle zur Weiterverarbeitung zugeführt (nicht dargestellt).

Neben Abgasen aus Biomasse-Feuerungsanlagen 1 ist das vorliegende Verfahren und die vorliegende Anmeldung auch bei anderen Abgasen, welche insbesondere feste Partikel und in flüssiger Form vorliegende Aerosole aufweisen, anwendbar.

Fig. 2 zeigt eine Ausführungsform der erfindungsgemäßen Anlage 4 zur Reinigung von Abgasen gemäß in Fig. 1. Das Rohgas wird entsprechend dem Pfeil B von unten in die Reinigungsanlage 4 eingebracht und wird durch entsprechende Einbauten 12 hinsichtlich der Strömung vergleichmäßigt. Über den Einbauten 12 zur Vergleichmäßigung der Strömung ist eine Spüleinrichtung 13 angeordnet, welche kontinuierlich oder diskontinuierlich die Einbauten 12 von Verunreinigungen befreit. Darüber ist das Nass-Elektrofilter 5 angeordnet, welches aus vorzugsweise zylindrischen Röhren 7 besteht. Die Röhren 7 werden innen von den Abgasen von unten nach oben durchströmt. Kühlluft wird entsprechend Pfeil A in einen Eingang 14 des Elektrofilters 5 eingebracht und umströmt dort die Röhren 7 des Nass-Elektrofilters 5. Durch die Abkühlung der Abgase kommt es zur Kondensation, sodass sich an der Innenwand 7 ein Flüssigkeitsfilm bildet, der die Selbstreinigung des Nass-Elektrofilters 5 fördert. Ein Ankleben von Verunreinigungen, beispielsweise von Harzaerosolen, wird dadurch erschwert. Die vom Nass-Elektrofilter 5 aufgewärmte Kühlluft tritt über den Ausgang 15 aus und wird einem Eingang 16 des Wärmetauschers 6 zugeführt. So wird bereits vorgewärmte Luft dem Wärmetauscher 6 zugeführt, wodurch der Wärmetauscher 6 für eine bestimmte Menge an Energie, welche aus den Abgasen rückgewonnen werden soll, kleiner gestaltet werden kann oder bei gleicher Baugröße eine größere Menge an Wärme rückgewonnen werden kann. Die im Wärmetauscher 6 weiter aufgewärmte Luft tritt über Ausgänge 17,18 aus und wird der weiteren Verwendung zugeführt. Die in der Reinigungsanlage 4 gereinigten Abgase werden allenfalls über einen Tropfenabscheider 19 in einen Reingaskamin 9 geleitet, von welchem sie in die Atmosphäre gelangen. Über Ventilatoren 8 gelangt die aufgewärmte Luft beispielsweise in den Reingaskamin 9, wo es zu einer Vermengung mit den gereinigten Abgasen kommt und dadurch zu einer Feuchtigkeitsreduktion und somit einer Reduktion der Schwadenbildung. Es kann jedoch die Energie auch zur Heizung von Betriebsgebäuden oder dergleichen verwendet werden und über entsprechende Leitungen 20 zugeführt werden. Vorteilhafterweise sind Regelungseinrichtungen 21 vorgesehen, durch welche die Menge an warmer Luft zur Entschwadung oder zur Heizung oder dergleichen geregelt und bestimmten Parametern angepasst werden kann.

In der Reinigungsanlage 4 befinden sich zur Abreinigung des Nass-Elektrofilters 5 und des Wärmetauschers 6 Sprüheinrichtungen 22, welche bei Bedarf betätigt werden. Die Anordnung 2 gemäß Fig. 2 hat den Vorteil, dass zur Führung der Kühlluft vom Nass-Elektrofilter 5 zum Wärmetauscher (6) keine eigenen Leitungen erforderlich sind, da der Wärmetauscher 6 übereinander oder unmittelbar neben dem Nass-Elektrofilter 5 angeordnet ist.

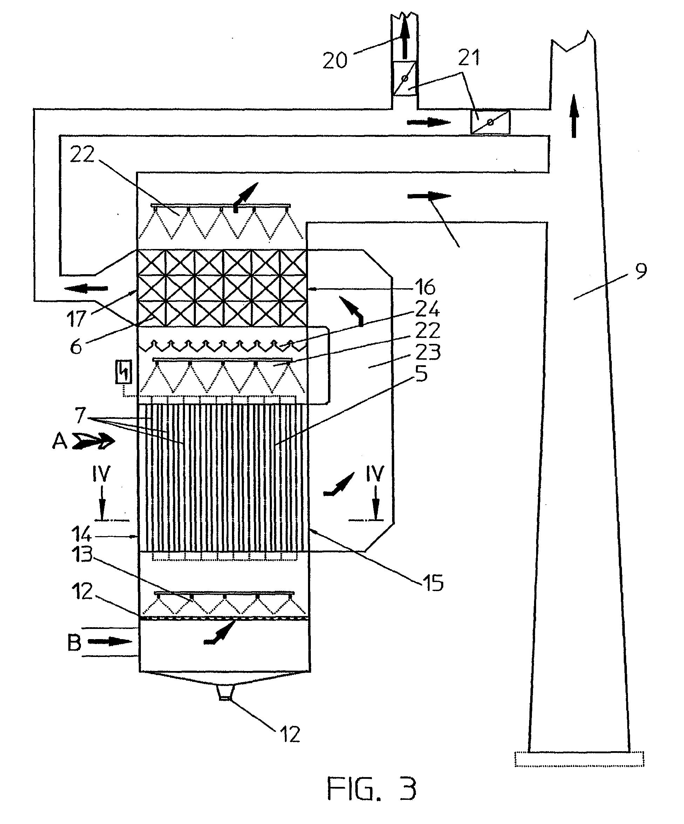

Fig. 3 zeigt eine dem gegenüber unterschiedliche Ausführungsform einer Reinigungsanlage 4, bei der der Wärmetauscher 6 über dem Nass-Elektrofilter 5 angeordnet ist. Eine Leitung 23 verbindet den Ausgang 15 für die Kühlluft des Nass-Elektrofilters 5 mit dem Eingang 16 für die Luft des Wärmetauschers 6. Eine derartige Anordnung benötigt weniger Grundfläche und ist in Bezug auf die Strömungsverhältnisse ebenfalls vorteilhaft. Zwischen dem Nass-Elektrofilter 5 und dem Wärmetauscher 6 ist ein Wassertrennboden 24 vorgesehen, über den das von der Sprüheinrichtung 22 herrührende Wasser abgeführt werden kann. Es können auch mehrere Nass-Elektrofilter 5 und Wärmetauscher 6 übereinander oder kombiniert übereinander und nebeneinander angeordnet werden.

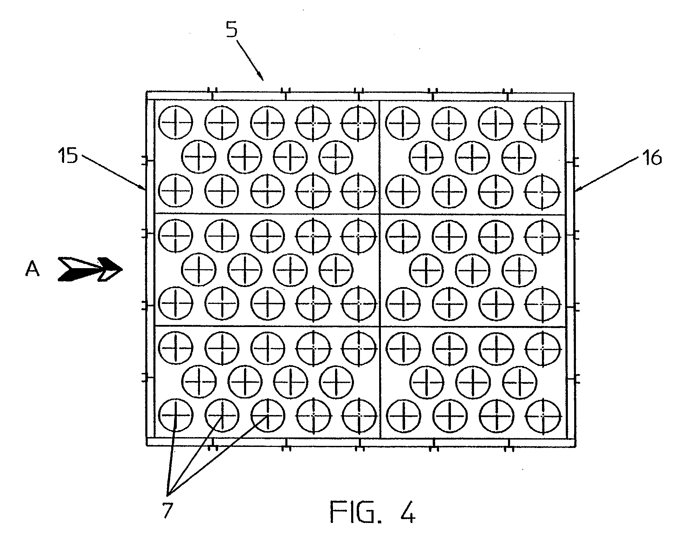

Fig. 4 zeigt schließlich das Schnittbild durch das Nass-Elektrofilter 5 gemäß Fig. 3 entlang der Schnittlinie IV-IV. Das Nass-Elektrofilter 5 besteht aus zylindrischen Röhren 7, welche innen von den zu reinigenden Abgasen durchströmt werden. Seitlich befindet sich der Eingang 14 für die Kühlluft, welche entsprechend Pfeil A in das Nass-Elektrofilter 5 eingeströmt wird. Über einen Ausgang 15 verlässt die im Nass-Elektrofilter 5 aufgewärmte Kühlluft das Nass-Elektrofilter 5. Die Abbildungen zeigen nur einige der möglichen Varianten für eine Anlage 4 zur Reinigung der Abgase.

## Patentansprüche

1. Verfahren zur Reinigung von Abgasen, wobei die Abgase elektrostatisch im Nassverfahren gereinigt und die Abgase während der elektrostatischen Reinigung mit Luft gekühlt werden, und wobei ein Teil der Wärme der Abgase über die bei der elektrostatischen Reinigung aufgewärmte Kühlluft rückgewonnen wird, **dadurch gekennzeichnet, dass** ein weiterer Teil der Wärme der Abgase im Wärmetauschverfahren rückgewonnen wird, indem die während der elektrostatischen Reinigung aufgewärmte Kühlluft in zumindest einer weiteren Stufe durch die Abgase weiter erwärmt wird.

2. Verfahren nach Anspruch 1, **dadurch gekennzeichnet, dass** die Abgase die elektrostatische Reinigungsstufe und die zumindest eine weitere Wärmetauschstufe von unten nach oben durchströmen.

3. Verfahren nach Anspruch 1 oder 2, **dadurch gekennzeichnet, dass** die Abgase vor der elektrostatischen Reinigung vorgereinigt werden.

4. Verfahren nach einem der Ansprüche 1 bis 3, **dadurch gekennzeichnet, dass** die Abgase vor der elektrostatischen Reinigung gekühlt und gegebenenfalls gesättigt werden.

5. Verfahren nach einem der Ansprüche 1 bis 4, **dadurch gekennzeichnet, dass** die Strömung der Abgase vor der elektrostatischen Reinigung vergleichmäßigt wird.

6. Verfahren nach einem der Ansprüche 1 bis 5, **dadurch gekennzeichnet, dass** zumindest ein Teil der rückgewonnenen Wärme zur Entschwadung der Abgase verwendet wird.

7. Verfahren nach einem der Ansprüche 1 bis 6, **dadurch gekennzeichnet, dass** die Menge der rückgewonnenen Wärme geregelt wird.

8. Verfahren nach einem der Ansprüche 1 bis 7, **dadurch** gekennzeichnt, dass 10 bis 40%, vorzugsweise 20 bis 25% der Wärmerückgewinnung in der zumindest einen elektrostatischen Reinigungsstufe erfolgt.

9. Verfahren nach einem der Ansprüche 1 bis 8, **dadurch gekennzeichnet, dass** den gereinigten Abgasen Feuchtigkeit entzogen wird.

10. Anlage zur Reinigung von Abgasen, mit zumindest einem Nass-Elektrofilter (5), mit zumindest einem Eingang (14) und zumindest einem Ausgang (15) für Kühlluft zur Rückgewinnung eines Teiles der Wärme der Abgase, **dadurch gekennzeichnet, dass** zumindest ein von den Abgasen durchströmter Wärmetauscher (6) mit zumindest einem Eingang (16) und zumindest einem Ausgang (17,18) für die zu erwärmende Luft zur Rückgewinnung eines weiteren Teiles der Wärme der Abgase vorgesehen ist, wobei zumindest ein Eingang (16) des zumindest einen Wärmetauschers (6) mit dem Ausgang (15) für die Kühlluft des Nass-Elektrofilters (5) verbunden ist, sodass der Wärmetauscher (6) von der vom Nass-Elektrofilter (5) aufgewärmten Kühlluft durchströmt wird.

11. Anlage nach Anspruch 10, **dadurch gekennzeichnet, dass** zumindest ein Nass-Elektrofilter (5) und zumindest ein Wärmetauscher (6) übereinander angeordnet sind, wobei der Einlass der Abgase unterhalb des Nass-Elektrofilters (5) angeordnet ist.

12. Anlage nach Anspruch 10, **dadurch gekennzeichnet, dass** zumindest ein Nass-Elektrofilter (5) und zumindest ein Wärmetauscher (6) nebeneinander angeordnet sind, wobei der Ausgang (15) für die Kühlluft des Nass-Elektrofilters (5) im Wesentlichen unmittelbar neben zumindest einem Eingang für die zu erwärmende Luft des Wärmetauschers (6), angeordnet ist.

13. Anlage nach einem der Ansprüche 10 bis 12, **dadurch gekennzeichnet, dass** zumindest ein Nass-Elektrofilter (5) als luftgekühltes Röhrenfilter mit vorzugsweise zylindrischen Röhren (7) ausgebildet ist.

14. Anlage nach mindestens einem der Ansprüche 10 bis 13, **dadurch gekennzeichnet, dass** vor dem Nass-Elektrofilter (5) zumindest eine Vorreinigungsstufe (2) angeordnet ist.

15. Anlage nach mindestens einem der Ansprüche 10 bis 14, **dadurch gekennzeichnet, dass** vor dem Nass-Elektrofilter (5) zumindest eine Kühl- und allenfalls Sättigungsstufe angeordnet ist.

16. Anlage nach einem der Ansprüche 10 bis 15, **dadurch gekennzeichnet, dass** vor dem Nass-Elektrofilter (5) Einbauten (12) zur Vergleichmäßigung der Strömung der Abgase vorgesehen sind.

17. Anlage nach einem der Ansprüche 10 bis 16, **dadurch gekennzeichnet, dass** zumindest ein Ausgang (17,18) für die zu erwärmende Luft des Wärmetauschers (6) mit einer Leitung zur Abführung der gereinigten Abgase in die Atmosphäre zur Entschwadung der Abgase verbunden ist.

18. Anlage nach einem der Ansprüche 10 bis 17, **dadurch gekennzeichnet, dass** eine Einrichtung (21) zur Regelung der Menge der zugeführten erwärmten Luft vorgesehen ist.

19. Anlage nach einem der Ansprüche 10 bis 18, **dadurch gekennzeichnet, dass** zumindest ein Wärmetauscher (6) als Kreuzstromwärmetauscher ausgebildet ist.
